# EUROPÄISCHE PATENTSCHRIFT

(11) **EP 4 126 311 B1**
(45) Veröffentlichungstag und Bekanntmachung des Hinweises auf die Patenterteilung: **16.07.2025**
(21) Anmeldenummer: 21713043.4
(22) Anmeldetag: 24.03.2021
(51) Int. Cl.: B01D 53/94, B01J 29/70, B01J 29/74, C01B 39/46

(54) **VERFAHREN ZUR OXIDATION VON IN EINEM ABGASSTROM ENTHALTENEM AMMONIAK**
PROCESS FOR THE OXIDATION OF AMMONIA IN AN EXHAUST GAS
PROCÉDÉ D'OXYDATION D'AMMONIAQUE DANS UN EFFLUENT GAZEUX

(30) Priorität: 24.03.2020 EP 20165113
(43) Veröffentlichungstag der Anmeldung: 08.02.2023
(73) Patentinhaber: Umicore AG & Co. KG, 63457 Hanau-Wolfgang (DE)
(72) Erfinder: EICH, Andreas, 63571 Gelnhausen (DE)
(86) Internationale Anmeldenummer: PCT/EP2021/057519
(87) Internationale Veröffentlichungsnummer: WO 2021/191246

(56) Entgegenhaltungen:
- EP-A1- 2 604 590
- CN-A- 107 282 090
- DE-A1- 1 545 293
- DE-A1- 102016 111 147
- GB-A- 2 552 262
- JP-A- 2013 163 647
- US-A1- 2018 280 945

## Beschreibung

Die vorliegende Erfindung betrifft ein Verfahren zur Oxidation von in einem Abgasstrom enthaltenem Ammoniak mit einem platin- und zinkhaltigen Zeolithen, insbesondere zur Reinigung der Abgase von mager betriebenen Verbrennungsmotoren, insbesondere Dieselmotoren.

Das Rohabgas von Dieselmotoren enthält neben Kohlenmonoxid CO, Kohlenwasserstoffen HC und Stickoxiden NOₓ einen relativ hohen Sauerstoffgehalt von bis zu 15 Vol.-%. Außerdem sind Partikelemissionen enthalten, die überwiegend aus Rußrückständen und gegebenenfalls organischen Agglomeraten bestehen und aus einer partiell unvollständigen Kraftstoffverbrennung im Zylinder herrühren.

Während Kohlenmonoxid und Kohlenwasserstoffe mittels Dieseloxidationskatalysatoren unschädlich gemacht werden können, sind zur Entfernung der Partikelemissionen Dieselpartikelfilter mit und ohne katalytisch aktive Beschichtung geeignet.

Stickoxide können beispielsweise durch selektive katalytische Reduktion (Selective Catalytic Reduction, SCR) an einem sogenannten SCR-Katalysator mit Ammoniak als Reduktionsmittel zu Stickstoff umgesetzt werden. Ammoniak kann durch Thermolyse und Hydrolyse einer in das Abgas eingespeisten Ammoniakvorläuferverbindung verfügbar gemacht werden. Beispiele für solche Vorläuferverbindungen sind Ammoniumcarbamat, Ammoniumformiat und vorzugsweise Harnstoff. Alternativ kann das Ammoniak durch katalytische Reaktionen innerhalb des Abgases gebildet werden.

Zur möglichst vollständigen Umsetzung der Stickoxide am SCR-Katalysator kann es erforderlich sein, Ammoniak in einer überstöchiometrischen Menge einzuspeisen, die in der Regel 10 bis 20% über der stöchiometrischen Menge liegt. Dies wiederum führt zu nicht umgesetztem Ammoniak im Abgas, was angesichts seiner toxischen Wirkungen und seiner Treibhausgas-Eigenschaften unerwünscht ist. Folglich werden Ammoniakemissionen in der Abgasgesetzgebung zunehmend begrenzt.

Zur Vermeidung von Ammoniakemissionen wurden bereits sogenannte Ammoniakschlupfkatalysatoren (ASC) entwickelt. Diese Katalysatoren umfassen üblicherweise einen Oxidationskatalysator zur Oxidation von Ammoniak bei möglichst niedrigen Temperaturen.

Solche Oxidationskatalysatoren umfassen in der Regel ein Edelmetall, wie beispielsweise Palladium und insbesondere Platin, auf einem Trägeroxid. Sie haben allerdings den Nachteil, Ammoniak nicht nur zu Stickstoff, Wasser und Sauerstoff, sondern auch zu schädlichen Spezies wie Distickstoffoxid (N₂O), Stickstoffmonoxid (NO) und Stickstoffdioxid (NO₂) zu oxidieren.

Es ist bekannt, die Selektivität der Ammoniakoxidation gegenüber Stickstoff durch Kombination des Oxidationskatalysators mit einem SCR-Katalysator zu verbessern. In der Regel liegen in diesem Fall die Komponenten in einer Schichtanordnung vor, wobei die SCR-Schicht normalerweise die obere Schicht bildet und auf der unten liegenden Oxidationsschicht angeordnet ist. ASC-Katalysatoren werden üblicherweise auf ein monolithisches Trägersubstrat, beispielsweise ein Durchflusssubstrat oder ein Wandflussfilter aufgetragen.

ASC Katalysatoren dieses Typs sind zum Beispiel aus EP410440A1, WO02/100520A1, EP2117702A2 und WO2010/062730A2 bekannt.

Allerdings besteht weiter Bedarf nach ASC Katalysatoren, die bei guter Selektivität gegenüber Stickstoff eine gute thermische Stabilität aufweisen und insbesondere nur wenig N₂O bilden. Es wurde nun überraschenderweise gefunden, dass Zeolithe, die Platin und Zink umfassen, die geforderten Eigenschaften aufweisen.

Mit Platin imprägnierte Zn-ZSM-5 Nanokatalysatoren sind in Catalysis Letters 148(2), Juni 2018, für Isomerisierungsreaktionen von Xylolen beschrieben.

Platin und Zink enthaltende Zeolithe vom Strukturtyp LTA zur Oxidation von Ethan sind in Journal of Energy Chemistry, Volume 30, March 2019, Seiten 42-48, offenbart.

Die US2018/280945 offenbart Ammoniak-Schlupfkatalysatoren, die einen Zeolithen umfassen, der Zink in das Zeolithgerüst eingebaut umfasst. Zeolithe, die Zink in das Zeolithgerüst eingebaut enthalten, offebart auch die GB2552262A. Diese Produkte werden als Oxidationskatalysatoren für stöchiometrisch betriebene Erdgasmotoren verwendet.

Die DE1545293 offenbart ein Verfahren zur Aufbereitung zuvor hydroformierter Kohlenwasserstoffe. Bei diesem Verfahren können als Katalysatoren Platin und Zink enthaltende Zeolithe vom Strukturtyp "Zeolith A" und Erionit verwendet werden. Das Dokument macht aber keinerlei Angaben zum SAR-Wert dieser Zeolithe.

Die EP2604590A1 betrifft ein Verfahren zur Herstellung ungesättigter Kohlenwasserstoffe und offenbart als Katalysatoren u.a. einen Zeolithen vom Strukturtyp MFI, auf dem Platin und Zink vorhanden sind. Die verwendeten Zeolithe haben sehr hohe SAR-Werte.

Die JP2013-163647A betrifft einen ähnlichen Gegenstand die EP2604590A1, wobei als Zeolithe solche vom Strukturtyp MFI, FER und BEA verwendet werden.

Die vorliegende Erfindung betrifft ein Verfahren zur Oxidation von in einem Abgasstrom enthaltenem Ammoniak mit einem Zeolithen, der Zink und Platin umfasst und der ausgewählt ist aus der Gruppe bestehend aus Zeolithen der Strukturtypen AEI, AFX, BEA, CHA, ERI, FER, KFI, LEV und MFI, wobei das Zink (i) als Zink-Kation in ionenausgetauschter Form in der Zeolithstruktur und (ii) als Zinkoxid in der Zeolithstruktur und/oder auf der Oberfläche der Zeolithstruktur vorliegt und wobei der Zeolith einen SAR (silica-to-alumina ratio) Wert von 2 bis 1000 aufweist.

Zeolithe sind zwei- oder dreidimensionale Strukturen, als deren kleinste Strukturen SiO₄- und AlO₄-Tetraeder angesehen werden können. Diese Tetraeder fügen sich zu größeren Strukturen zusammen, wobei jeweils zwei über ein gemeinsames Sauerstoffatom verbunden sind. Dabei können Ringe verschiedener Größe gebildet werden, beispielsweise Ringe aus vier, sechs oder auch neun tetraedrisch koordinierten Silizium- oder Aluminiumatomen. Die verschiedenen Zeolithtypen werden häufig über die größte Ringgröße definiert, weil diese Größe bestimmt, welche Gastmoleküle in die Zeolithstruktur eindringen können und welche nicht. Es ist geläufig, großporige Zeolithe mit einer maximalen Ringgröße von 12, mittelporige Zeolithe mit einer maximalen Ringgröße von 10 und kleinporige Zeolithe mit einer maximalen Ringgröße von 8 zu unterscheiden.

Zeolithe werden des Weiteren von der Strukturkommission der International Zeolite Association in Strukturtypen unterteilt, die jeweils mit einem Code aus drei Buchstaben belegt sind, siehe zum Beispiel Atlas of Zeolite Framework Types, Elsevier, 5. Auflage, 2001.

Bevorzugte Zeolithe sind ausgewählt aus der Gruppe bestehend aus Zeolithen der Strukturtypen AEI, AFX, CHA und FER.

Ein ganz bevorzugter Zeolith gehört dem Strukturtypen AEI an.

Ein weiterer ganz bevorzugter Zeolith gehört dem Strukturtypen AFX an. Ein weiterer ganz bevorzugter Zeolith gehört dem Strukturtypen CHA an. Ein weiterer ganz bevorzugter Zeolith gehört dem Strukturtypen FER an.

Der erfindungsgemäß eingesetzte Zeolith weist insbesondere einen SAR (silica-to-alumina ratio)-Wert von 2 bis 500 auf, bevorzugt von 2 bis 100 und besonders bevorzugt von 5 bis 50.

Im Rahmen der vorliegenden Erfindung umfasst der Begriff "Zeolith" ausdrücklich keine Aluminiumoxid und Siliziumoxid umfassende Mischoxide, wie sie in der Literatur zum Beispiel als "SiO_{2/}Al₂O₃" beschrieben sind.

Das Platin liegt im erfindungsgemäß eingesetzten Zeolithen bevorzugt als Platin-Kation in der Zeolithstruktur vor, das heißt in ionenausgetauschter Form. Es kann aber auch ganz oder teilweise als Platinmetall und/oder als Platinoxid in der Zeolith-Struktur und/oder auf der Oberfläche der Zeolithstruktur vorliegen.

Das Platin kann in Mengen von 0,01 bis 20 Gew.-% vorliegen, bezogen auf die Summe der Gewichte von Zeolith, Zink und Platin und berechnet als Zinkmetall und Platinmetall.

Bevorzugt liegt das Platin in Mengen von 0,5 bis 10, besonders bevorzugt von 0,5 bis 6 Gew.-% und ganz besonders bevorzugt von 0,5 bis 5 Gew.-% vor, bezogen auf die Summe der Gewichte von Zeolith, Zink und Platin und berechnet als Zinkmetall und Platinmetall.

Das Zink liegt im erfindungsgemäß eingesetzten Zeolithen (i) als Zink-Kation in ionenausgetauschter Form in der Zeolithstruktur und (ii) als Zinkoxid

in der Zeolithstruktur und/oder auf der Oberfläche der Zeolithstruktur vor. Dies bedeutet insbesondere, dass das Zink gemäß vorliegender Erfindung nicht Bestandteil und kein Baustein des Zeolithgerüstes ist. Das Zink kann in Mengen von 0,01 bis 20 Gew.-% vorliegen, bezogen auf die Summe der Gewichte von Zeolith, Zink und Platin und berechnet als Zinkmetall und Platinmetall.

Bevorzugt liegt das Zink in Mengen von 0,5 bis 10, besonders bevorzugt von 0,5 bis 6 Gew.-% und ganz besonders bevorzugt von 0,5 bis 5 Gew.-% vor, bezogen auf die Summe der Gewichte von Zeolith, Zink und Platin und berechnet als Zinkmetall und Platinmetall.

Der Zeolith des Materials A weist bevorzugt ein Masseverhältnis Platin : Zink von 10: 1 bis 1:17, besonders bevorzugt 6:1 bis 1:10 und ganz besonders bevorzugt von 1:2 bis 1:7 auf, wobei Platin als Platinmetall und Zink als Zinkmetall berechnet ist.

Der erfindungsgemäß eingesetzte Zeolith kann nach an sich bekannten Methoden hergestellt werden. So wird er zum Beispiel durch Imprägnieren eines Zeolithen, der beispielsweise in der H- oder NH₄-Form vorliegt, mit einer wässrigen Lösung einer Mischung von Platin- und Zinksalzen in den entsprechenden Mengen nach der Incipient Wetness-Methode und anschließender Trocknung und Kalzinierung erhalten. Als wasserlösliches Platinsalz kommt insbesondere Platinnitrat (Pt[NO₃]₂) und als wasserlösliches Zinksalz insbesondere Zinkacetat (Zn[Ac]₂) in Frage.

Die Kalzinierung des imprägnierten Zeolithen erfolgt insbesondere bei Temperaturen von 250 bis 550°C.

In einem alternativen Verfahren wird eine wässrige Suspension eines Zeolithen bei alkalischen pH-Werten mit einem Platinsalz, zum Beispiel Pt-TEAH (Tetraethylammonium) versetzt, so dass das Platin am Zeolithen adsorbiert werden kann. Anschließend wird ein saurer pH-Wert eingestellt und Zink zum Beispiel in Form von Zinkacetat zugefügt.

In einer bevorzugten Ausführungsform der vorliegenden Erfindung liegt der erfindungsgemäß eingesetzte Zeolith auf einem Trägersubstrat vor.

Die vorliegende Offenbarung betrifft auch einen Katalysator umfassend ein Trägersubstrat der Länge L und einen Zeolithen, der Zink und Platin umfasst und der ausgewählt ist aus der Gruppe bestehend aus Zeolithen der Strukturtypen AEI, AFX, BEA, CHA, ERI, FER, KFI, LEV und MFI, wobei das Zink (i) als Zink-Kation in ionenausgetauschter Form in der Zeolith-struktur und/oder (ii) als Zinkoxid in der Zeolithstruktur und/oder auf der Oberfläche der Zeolithstruktur vorliegt und wobei der Zeolith einen SAR (silica-to-alumina ratio) Wert von 2 bis 1000 aufweist.

Das Trägersubstrat kann ein Durchflusssubstrat oder ein Wandflussfilter sein.

Ein Wandflussfilter ist ein Trägersubstrat, der Kanäle der Länge L umfasst, die sich parallel zwischen einem ersten und einem zweiten Ende des Wandflussfilters erstrecken, die abwechselnd entweder am ersten oder am zweiten Ende verschlossen sind und die durch poröse Wände getrennt sind. Ein Durchflusssubstrat unterscheidet sich von einem Wandflussfilter insbesondere darin, dass die Kanäle der Länge L an ihren beiden Enden offen sind.

Wandflussfilter weisen in unbeschichtetem Zustand beispielsweise Porositäten von 30 bis 80, insbesondere 50 bis 75 % auf. Ihr durchschnittlicher Porendurchmesser beträgt in unbeschichtetem Zustand beispielsweise 5 bis 30 Mikrometer.

In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Durchflusssubstrate sind dem Fachmann ebenso wie Wandflussfilter bekannt und sind am Markt erhältlich. Sie bestehen beispielsweise aus Silicium-Carbid, Aluminium-Titanat oder Cordierit.

In einer Ausführungsform des erfindungsgemäß eingesetzten Katalysators liegt der Zeolith, der Zink und Platin umfasst, in Form einer Beschichtung auf dem Trägersubstrat vor. Dabei kann sich die Beschichtung über die gesamte Länge L des Trägersubstrates oder nur über einen Teil davon erstrecken. In beiden Fällen kann das Trägersubstrat auch eine oder mehrerer weitere katalytisch aktive Beschichtungen tragen.

Im Falle eines Wandflussfilters kann sich die Beschichtung auf den Oberflächen der Eingangskanäle, auf den Oberflächen der Ausgangskanäle und/oder in der porösen Wand zwischen Ein- und Ausgangskanälen befinden.

Erfindungsgemäß eingesetzte Katalysatoren, bei denen der Zeolith, der Zink und Platin umfasst, in Form einer Beschichtung auf dem Trägersubstrat vorliegen, können nach dem Fachmann geläufigen Methoden hergestellt werden, so etwa nach den üblichen Tauchbeschichtungsverfahren bzw. Pump- und Saug-Beschichtungsverfahren mit sich anschließender thermischer Nachbehandlung (Kalzination). Dem Fachmann ist bekannt, dass im Falle von Wandflussfiltern deren durchschnittliche Porengröße und die mittlere Teilchengröße der zu beschichtenden Materialien so aufeinander abgestimmt werden können, dass diese auf den porösen Wänden, die die Kanäle des Wandflussfilters bilden, liegen (auf-Wand-Beschichtung). Die mittlere Teilchengröße der zu beschichtenden Materialien kann aber auch so gewählt werden, dass sich diese in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße der der zu beschichtenden Materialien klein genug sein, um in die Poren des Wandflussfilters einzudringen.

In einer anderen Ausführungsform der vorliegenden Offenbarung ist das Trägersubstrat aus dem Zeolithen, der Zink und Platin umfasst, sowie einer Matrixkomponente gebildet.

Trägersubstrate, Durchflusssubstrate ebenso wie Wandflussfilter, die nicht nur aus inertem Material, wie beispielsweise Cordierit bestehen, sondern die daneben auch ein katalytisch aktives Material enthalten, sind dem Fachmann bekannt. Zu ihrer Herstellung wird eine Mischung aus beispielsweise 10 bis 95 Gew.-% inerter Matrixkomponente und 5 bis 90 Gew.-% katalytisch aktiven Materials nach an sich bekannten Verfahren extrudiert. Als Matrixkomponenten können dabei alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.

Das extrudierte Trägersubstrat, das den Zeolithen, der Zink und Platin umfasst, kann in Ausführungsformen der vorliegenden Erfindung mit einer oder mehreren katalytisch aktiven Beschichtungen beschichtet sein.

In einer weiteren Ausführungsform der vorliegenden Offenbarung wird ein Trägersubstrat verwendet, das aus gewellten Blättern aus inerten Materialien aufgebaut ist. Solche Trägersubstrate sind dem Fachmann als "corrugated substrate" bekannt. Geeignete inerte Materialien sind zum Beispiel faserförmige Materialien mit einem durchschnittlichen Faserdurchmesser von 50 bis 250 µm und einer durchschnittlichen Faserlänge von 2 bis 30 mm. Bevorzugt sind faserförmige Materialien hitzebeständig und bestehen aus Siliziumdioxid, insbesondere aus Glasfasern.

Zur Herstellung solcher Trägersubstrate werden zum Bespiel Blätter aus den genannten Fasermaterialien in bekannter Weise gewellt und die einzelnen gewellten Blätter zu einem zylindrischen monolithisch strukturierten Körper mit den Körper durchziehenden Kanälen geformt. Vorzugsweise wird durch Aufschichten einer Anzahl der gewellten Blätter zu parallelen Schichten mit unterschiedlicher Orientierung der Wellung zwischen den Schichten ein monolithisch strukturierter Körper mit einer kreuzweisen Wellungsstruktur geformt. In einer Ausführungsform können zwischen den gewellten Blättern ungewellte, d.h. flache Blätter angeordnet sein.

Substrate aus gewellten Blättern können direkt mit dem Zeolithen, der Zink und Platin umfasst, beschichtet werden, vorzugsweise werden sie aber zunächst mit einem inerten Material, zum Beispiel Titandioxid, und erst dann mit dem katalytischen Material beschichtet.

Die folgenden Beispiele 1-4 sind nicht-erfindungsgemäß.

### Beispiel 1

Zunächst wird eine gemischte Platinnitrat-/Zinkacetatlösung hergestellt, deren Volumen der 50 prozentigen Wasseraufnahme des Zeolithen (ein handelsüblicher Zeolith vom Strukturtyp CHA) entspricht. Bezogen auf die finale Zusammensetzung des Platin und Zink enthaltenden Zeolithen werden 0,42 Gewichts-% Platin und 0,07 Gewichts-% Zink (Massenverhältnis Pt:Zn = 6:1) in einem mechanischen Mischer auf den Zeolithen aufgetragen. Die anschließende thermische Behandlung umfasst eine Trocknung bei 120 °C, eine Kalzinierung bei 350 °C sowie eine Temperung bei 550 °C an Luft.

In der darauffolgenden Washcoat-Präparation werden 10 % eines handelsüblichen Aluminiumoxidsols (bezogen auf die Gesamtbeladung) zugesetzt und ein damit ein handelsübliches Trägersubstrat aus Keramik mit einer Washcoat-Beladung von 25 g/l beschichtet, welcher letztlich an Luft bei 120 °C getrocknet, bei 350 °C kalziniert und bei 550 °C getempert wird. Der erhaltene Katalysator wird nachstehend K1 genannt.

### Beispiel 2

Beispiel 1 wird wiederholt mit dem Unterschied, dass die Zinkmenge 0,2 Gew.-% beträgt (Massenverhältnis Pt:Zn = 2:1).

Der erhaltene Katalysator wird nachstehend K2 genannt.

### Beispiel 3

Beispiel 1 wird wiederholt mit dem Unterschied, dass die Zinkmenge 0,6 Gew.-% beträgt (Massenverhältnis Pt:Zn = 1:1,5).

Der erhaltene Katalysator wird nachstehend K3 genannt.

### Beispiel 4

Beispiel 1 wird wiederholt mit dem Unterschied, dass die Zinkmenge 2,64 Gew.-% beträgt (Massenverhältnis Pt:Zn = 1:6,6).

Der erhaltene Katalysator wird nachstehend K4 genannt.

### Vergleichsbeispiel 1

Beispiel 1 wird wiederholt mit dem Unterschied, dass kein Zink eingesetzt wird. Der erhaltene Katalysator wird nachstehend VK1 genannt.

### Beispiel 5

Ein handelsüblicher Zeolith vom Strukturtyp CHA wird in Wasser vorgelegt und der pH-Wert auf 10 eingestellt. Sodann wird Pt-TEAH zugegeben und die Suspension 24 h gerührt. Anschließend wird der pH-Wert auf 6 gestellt, Zinkacetat und 10 % Aluminiumoxidsol zugegeben. Das Massenverhältnis Pt:Zn betrug 1:1,7.

Anschließend wird nach einer Linearmahlung ein handelsübliches Trägersubstrat aus Keramik mit einer Washcoatmenge von 25 g/l beschichtet. Die abschließende Temperaturbehandlung an Luft umfasst eine Trocknung bei 120 °C sowie eine Kalzinierung und Temperung bei 350 und 550 °C. Die Gesamtedelmetallkonzentration auf dem finalen Katalysator (nachstehend K5 genannt) liegt bei 0,42 Gewichts-%.

### Vergleichsbeispiel 2

Beispiel 5 wird wiederholt mit dem Unterschied, dass nach Zugabe von Pt-TEAH 20 h gerührt wird und kein Zink eingesetzt wird. Der erhaltene Katalysator wird nachstehend VK2 genannt.

### Bestimmung des NH₃-Light Off und der N₂O-Bildung

### a) Alterung

Aus den Katalysatoren K1 bis K5 und VK1 und VK2 wurden jeweils 4 Bohrkerne geschnitten, wovon zwei in frischem Zustand und zwei nach hydrothermischer Alterung (10% H₂O, 10% O₂, Rest N₂) in einem Ofen für 16 Stunden bei 800°C (nachstehend 16H800) gemessen wurden.

### b) Testbedingungen im Laborreaktor

Durch die gemäß a) erhaltenen Bohrkerne wurde in einem Laborreaktor ein synthetisches Testabgas aus 300 ppm NH₃, 5% O₂, 5% H₂O, Rest N₂ (Test A bzw. B) bzw. ein Testabgas aus 300 ppm NH₃, 200 ppm NO, 5% O₂, 5% H₂O, Rest N₂ (Test C bzw. D) mit 1950 L/Stunde geleitet. Dabei wurde die Temperatur des Testabgases nach einer Konditionierungsphase (~ 30 K/min von 150 auf 600 °C in 5% O₂, Rest N₂) mit 10K/min von 150 °C auf 600°C erhöht und die NH₃-Umsetzung mittels konventioneller Methode bestimmt.

### c) Ergebnisse

Die folgenden Tabellen zeigen die erhaltenen Ergebnisse:

**Tabelle 1:**

| **Test A: frisch, nur NH₃** | **K1** | **K2** | **K3** | **K4** | **VK1** | **K5** | **VK2** |
|---|---|---|---|---|---|---|---|
| NH₃ T50 /°C | 222 | 221 | 220 | 218 | 228 | 208 | 220 |
| NH₃ Umsatz (350 °C) /% | 99 | 99 | 99 | 99 | 99 | 99 | 98 |
| NH₃ Umsatz (550 °C) /% | 99 | 99 | 99 | 100 | 100 | 100 | 99 |
| NO-Bildung (210 - 400 °C) /ppm | 79 | 70 | 77 | 89 | 65 | 113 | 70 |
| NO-Bildung (550 °C) /ppm | 206 | 200 | 206 | 235 | 196 | 225 | 202 |
| N₂O-Bildung (210 - 400 °C) /ppm | 44 | 48 | 48 | 48 | 47 | 35 | 44 |
| N₂O-Bildung max. /ppm | 81 | 86 | 85 | 86 | 87 | 66 | 79 |

**Tabelle 2:**

| **Test B: 16H800, nur NH₃** | **K1** | **K2** | **K3** | **K4** | **VK1** | **K5** | **VK2** |
|---|---|---|---|---|---|---|---|
| NH₃ T50 /°C | 209 | 207 | 205 | 203 | 210 | 194 | 202 |
| NH₃ Umsatz (350 °C) /% | 97 | 97 | 97 | 97 | 97 | 95 | 97 |
| NH₃ Umsatz (550 °C) /% | 98 | 98 | 98 | 98 | 98 | 95 | 98 |
| NO-Bildung (210 - 400 °C) /ppm | 124 | 125 | 128 | 133 | 125 | 155 | 135 |
| NO-Bildung (550 °C) /ppm | 252 | 252 | 251 | 257 | 254 | 265 | 254 |
| N₂O-Bildung (210 - 400 °C) /ppm | 34 | 34 | 33 | 32 | 35 | 25 | 31 |
| N₂O-Bildung max. /ppm | 54 | 55 | 53 | 47 | 54 | 44 | 51 |

**Tabelle 3:**

| **Test C: frisch, NH₃ + NO** | **K1** | **K2** | **K3** | **K4** | **VK1** | **K5** | **VK2** |
|---|---|---|---|---|---|---|---|
| NH₃ T50 /°C | 206 | 202 | 203 | 198 | 206 | 209 | 210 |
| NH₃ Umsatz (350 °C) /% | 99 | 99 | 99 | 99 | 99 | 99 | 99 |
| NH₃ Umsatz (550 °C) /% | 99 | 100 | 99 | 100 | 100 | 100 | 100 |
| NO-Bildung (210 - 400 °C) /ppm | 192 | 175 | 186 | 200 | 168 | 238 | 195 |
| NO-Bildung (550 °C) /ppm | 364 | 354 | 363 | 403 | 346 | 389 | 384 |
| N₂O-Bildung (210 - 400 °C) /ppm | 77 | 82 | 83 | 82 | 84 | 59 | 75 |
| N₂O-Bildung max. /ppm | 149 | 160 | 157 | 162 | 159 | 119 | 138 |

**Tabelle 4:**

| **Test D: 16H800, NH₃ + NO** | **K1** | **K2** | **K3** | **K4** | **VK1** | **K5** | **VK2** |
|---|---|---|---|---|---|---|---|
| NH₃ T50 /°C | 214 | 213 | 214 | 215 | 217 | 212 | 214 |
| NH₃ Umsatz (350 °C) /% | 96 | 97 | 97 | 97 | 96 | 95 | 97 |
| NH₃ Umsatz (550 °C) /% | 98 | 98 | 98 | 98 | 97 | 96 | 98 |
| NO-Bildung (210 - 400 °C) /ppm | 269 | 270 | 273 | 279 | 268 | 304 | 296 |
| NO-Bildung (550 °C) /ppm | 434 | 433 | 433 | 440 | 432 | 453 | 461 |
| N₂O-Bildung (210 - 400 °C) /ppm | 60 | 60 | 57 | 55 | 60 | 42 | 49 |
| N₂O-Bildung max. /ppm | 105 | 105 | 102 | 94 | 102 | 83 | 91 |

Die Versuchsergebnisse zeigen, dass abhängig von Zink-Gehalt der nicht-erfindungsgemäßen Katalysatoren K1 bis K4 bzw. des erfindungsgemäßen Katalysators K5 die Light Off-Temperaturen für Ammoniak im Vergleich zu den nur Platin enthaltenden Vergleichskatalysatoren VK1 und VK2 fallen. Diese höhere Aktivität führt zwar zu einer höheren NO-Bildung, nicht aber zu einer höheren, sondern zu einer geringeren N₂O-Bildung. Die Zink-Zugabe führt also zu einer höheren NO Selektivität und einer niedrigeren N₂O-Selektivität. Die höhere NO Selektivität ist allerdings nicht nachteilig, da NO von einer SCR-Schicht zu Stickstoff und Sauerstoff umgesetzt werden kann.

## Patentansprüche

1. Verfahren zur Oxidation von in einem Abgasstrom enthaltenen Ammoniak, **dadurch gekennzeichnet, dass** der Abgasstrom über einen Zeolithen geleitet wird, der Zink und Platin umfasst und der ausgewählt ist aus der Gruppe bestehend aus Zeolithen der Strukturtypen AEI, AFX, BEA, CHA, ERI, FER, KFI, LEV und MFI, wobei das Zink (i) als Zink-Kation in ionenausgetauschter Form in der Zeolithstruktur und (ii) als Zinkoxid in der Zeolithstruktur und/oder auf der Oberfläche der Zeolithstruktur vorliegt und wobei der Zeolith einen SAR (silica-to-alumina ratio) Wert von 2 bis 1000 aufweist.

2. Verfahren nach Anspruch 1, **dadurch gekennzeichnet, dass** der Zeolith ausgewählt ist aus der Gruppe bestehend aus Zeolithen der Strukturtypen AEI, AFX, CHA und FER.

3. Verfahren nach Anspruch 1 und/oder 2, **dadurch gekennzeichnet, dass** der Zeolith dem Strukturtyp AEI angehört.

4. Verfahren nach Anspruch 1 und/oder 2, **dadurch gekennzeichnet, dass** der Zeolith dem Strukturtyp AFX angehört.

5. Verfahren nach Anspruch 1 und/oder 2, **dadurch gekennzeichnet, dass** der Zeolith dem Strukturtyp CHA angehört.

6. Verfahren nach Anspruch 1 und/oder 2, **dadurch gekennzeichnet, dass** der Zeolith dem Strukturtyp FER angehört.

7. Verfahren nach einem oder mehreren der Ansprüche 1 bis 6, **dadurch gekennzeichnet, dass** der Zeolith einen SAR (silica-to-alumina ratio)-Wert von 2 bis 500 aufweist.

8. Verfahren nach einem oder mehreren der Ansprüche 1 bis 7, **dadurch gekennzeichnet, dass** der Zeolith einen SAR (silica-to-alumina ratio)-Wert von 2 bis 100 aufweist.

9. Verfahren nach einem oder mehreren der Ansprüche 1 bis 8, **dadurch gekennzeichnet, dass** der Zeolith einen SAR (silica-to-alumina ratio)-Wert von 2 bis 50 aufweist.

10. Verfahren gemäß einem oder mehreren der Ansprüche 1 bis 9, **dadurch gekennzeichnet, dass** der Zeolith das Platin in Mengen von 0,01 bis 20 Gew.-% umfassst, bezogen auf die Summe der Gewichte von Zeolith, Zink und Platin und berechnet als Zinkmetall und Platinmetall.

11. Verfahren gemäß einem oder mehreren der Ansprüche 1 bis 10, **dadurch gekennzeichnet, dass** der Zeolith das Zink in Mengen von 0,01 bis 20 Gew.-% umfasst, bezogen auf die Summe der Gewichte von Zeolith, Zink und Platin und berechnet als Zinkmetall und Platinmetall.

12. Verfahren gemäß einem oder mehreren der Ansprüche 1 bis 11, **dadurch gekennzeichnet, dass** das Masseverhältnis Platin : Zink des Zeolithen 6:1 bis 1:7 ist, wobei Platin als Platinmetall und Zink als Zinkmetall berechnet ist.

## Claims

1. Method for the oxidation of ammonia contained in an exhaust gas stream, **characterized in that** the exhaust gas stream is passed over a zeolite which comprises zinc and platinum and which is selected from the group consisting of zeolites of the structure types AEI, AFX, BEA, CHA, ERI, FER, KFI, LEV and MFI, wherein the zinc is present (i) as a zinc cation in ion-exchanged form in the zeolite structure and (ii) as zinc oxide in the zeolite structure and/or on the surface of the zeolite structure and wherein the zeolite has a SAR (silica-to-alumina ratio) value of 2 to 1000.

2. Method according to claim 1, **characterized in that** the zeolite is selected from the group consisting of zeolites of the structural types AEI, AFX, CHA, and FER.

3. Method according to claim 1 and/or 2, **characterized in that** the zeolite belongs to the AEI structural type.

4. Method according to claim 1 and/or 2, **characterized in that** the zeolite belongs to the AFX structural type.

5. Method according to claim 1 and/or 2, **characterized in that** the zeolite belongs to the CHA structural type.

6. Method according to claim 1 and/or 2, **characterized in that** the zeolite belongs to the FER structural type.

7. Method according to one or more of claims 1 to 6, **characterized in that** the zeolite has a SAR (silica-to-alumina ratio) value of 2 to 500.

8. Method according to one or more of claims 1 to 7, **characterized in that** the zeolite has a SAR (silica-to-alumina ratio) value of 2 to 100.

9. Method according to one or more of claims 1 to 8, **characterized in that** the zeolite has a SAR (silica-to-alumina ratio) value of 2 to 50.

10. Method according to one or more of claims 1 to 9, **characterized in that** the zeolite comprises platinum in amounts of 0.01 to 20% by weight, based on the sum of the weights of zeolite, zinc, and platinum and calculated as zinc metal and platinum metal.

11. Method according to one or more of claims 1 to 10, **characterized in that** the zeolite comprises zinc in amounts of 0.01 to 20 % by weight, based on the sum of the weights of zeolite, zinc, and platinum and calculated as zinc metal and platinum metal.

12. Method according to one or more of claims 1 to 11, **characterized in that** the mass ratio of platinum: Zinc of the zeolite is 6:1 to 1:7, wherein platinum is calculated as platinum metal and zinc is calculated as zinc metal.

## Revendications

1. Procédé pour l'oxydation de l'ammoniac contenu dans un courant de gaz d'échappement, **caractérisé en ce que** le courant de gaz d'échappement est passé sur une zéolite qui comprend du zinc et du platine et qui est choisie dans le groupe constitué par les zéolites des types de structure AEI, AFX, BEA, CHA, ERI, FER, KFI, LEV et MFI, dans lequel le zinc est présent (i) comme un cation zinc sous forme d'échange d'ions dans la structure zéolite et (ii) comme oxyde de zinc dans la structure zéolite et/ou sur la surface de la structure zéolite et dans lequel la zéolite a une valeur SAR (rapport silice/alumine) de 2 à 1000.

2. Procédé selon la revendication 1, **caractérisé en ce que** la zéolithe est choisie dans le groupe constitué de zéolites des types structuraux AEI, AFX, CHA et FER.

3. Procédé selon la revendication 1 et/ou 2, **caractérisé en ce que** la zéolite appartient au type structurel AEI.

4. Procédé selon la revendication 1 et/ou 2, **caractérisé en ce que** la zéolite appartient au type structurel AFX.

5. Procédé selon la revendication 1 et/ou 2, **caractérisé en ce que** la zéolite appartient au type structurel CHA.

6. Procédé selon la revendication 1 et/ou 2, **caractérisé en ce que** la zéolite appartient au type structurel FER.

7. Procédé selon une ou plusieurs des revendications 1 à 6, **caractérisé en ce que** la zéolite a une valeur SAR (rapport silice/alumine) de 2 à 500.

8. Procédé selon une ou plusieurs des revendications 1 à 7, **caractérisé en ce que** la zéolite a une valeur SAR (rapport silice/alumine) de 2 à 100.

9. Procédé selon une ou plusieurs des revendications 1 à 8, **caractérisé en ce que** la zéolite a une valeur SAR (rapport silice/alumine) de 2 à 50.

10. Procédé selon l'une ou plusieurs des revendications 1 à 9, **caractérisé en ce que** la zéolite comprend du platine en quantités de 0,01 à 20 % en poids, sur la base de la somme des poids de zéolite, de zinc et de platine, calculés en tant que zinc métallique et platine métallique.

11. Procédé selon l'une ou plusieurs des revendications 1 à 10, **caractérisé en ce que** la zéolite comprend du zinc en quantités de 0,01 à 20 % en poids, sur la base de la somme des poids de zéolite, de zinc et de platine, calculés en tant que zinc métallique et platine métallique.

12. Procédé selon une ou plusieurs des revendications 1 à 11, **caractérisé en ce que** le rapport massique platine:zinc de la zéolite est de 6:1 à 1:7, dans lequel le platine étant calculé en tant que platine métallique et le zinc étant calculé en tant que zinc métallique.
